## Europäisches Patentamt

## European Patent Office

## Office européen des brevets

(19)

(11) Publication number: **0 065 183 B2**

(12) # NEW EUROPEAN PATENT SPECIFICATION

(45) Date of publication of the new patent specification: 26.07.89

(51) Int. Cl.⁴: **B 60 K 13/02**

(21) Application number: **82103821.3**

(22) Date of filing: **04.05.82**

(54) **Air duct structure of engine for motor vehicle.**

(30) Priority: **11.05.81 JP 66683/81**

(43) Date of publication of application:
**24.11.82 Bulletin 82/47**

(45) Publication of the grant of the patent:
**09.04.86 Bulletin 86/15**

(45) Mention of the opposition decision:
**26.07.89 Bulletin 89/30**

(84) Designated Contracting States:
**DE FR GB IT**

(56) References cited:
**DE-A- 1 910 876**
**DE-C- 1 082 089**
**FR-A- 1 023 124**

**Revue Technique Automobile, 1977, Nr. 364, p. 103**
**Revue Technique Automobile, 1977, Nr. 366, p. 76**
**Dubbels Taschenbuch für den Maschinenbau, Springer Verlag 1966, pp. 789+790**
**Maschinenteile Teil 1, 5. Auflage 1976, Teubner Verlag Suttgart, pp. 210+211**

(73) Proprietor: **NISSAN MOTOR CO., LTD., No.2, Takara-cho, Kanagawa-ku, Yokohama-shi Kanagawa-ken 221 (JP)**

(72) Inventor: **Suzuki, Takashi c/o Tsurumi Plant of, Nissan Motor Co., Ltd. 6-1 Daikoku-cho, Tsurumi-ku Yokohama-shi (JP)**
Inventor: **Watanabe, Osamu c/o Tsurumi Plant of, Nissan Motor Co., Ltd. 6-1 Daikoku-cho, Tsurumi-ku Yokohama-shi (JP)**
Inventor: **Sogao, Kazuhiro c/o Tsurumi Plant of, Nissan Motor Co., Ltd. 6-1 Daikoku-cho, Tsurumi-ku Yokohama-shi (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Description

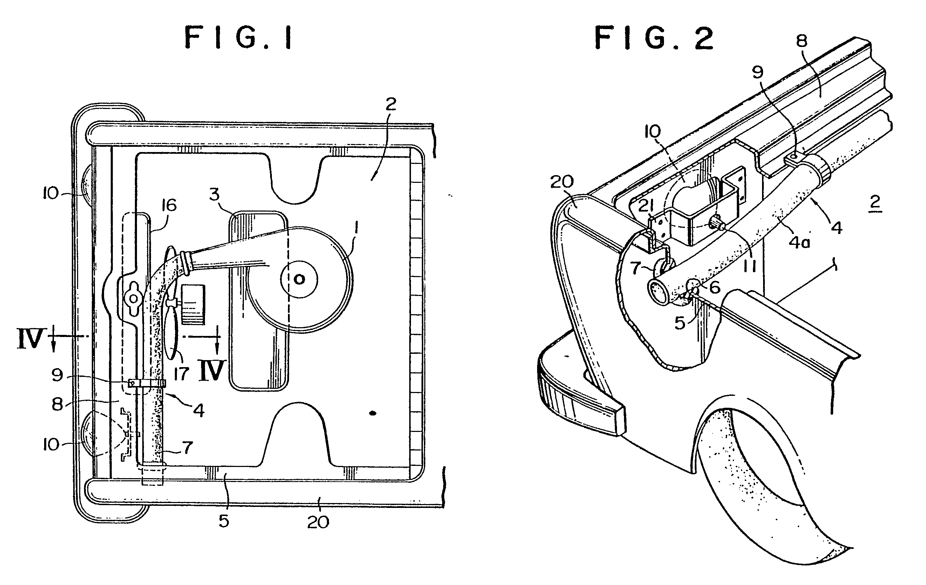

The present invention relates to an air duct structure of an engine for a motor vehicle, comprising an air duct for introducing air into said engine, said air duct being supported at its front end by a first supporting member and at an intermediate portion by a second supporting member, the portion of the air duct between said first supporting member and a second supporting member lying immediately behind a head lamp unit of the motor vehicle. "Prior Art", as shown in Figure 1, discloses an air cleaner 1 mounted close to the engine 3 in the central upper portion of the engine room 2 and being connected to an air duct 4 for introducing outer air. The air duct is usually formed of synthetic resin into a certain shape, as shown in Figure 1 and 2, and is led toward the side of the car body with its front end inserted, through a grommet 7, into an opening 6 formed in the hood ledge 5. An intermediate portion of the air duct 4 is secured to the central upper portion of radiator core support 8 by fastenings 9 such as screws. With this arrangement, a duct portion 4a, i.e., the portion of the air duct extending from the fastening 9 secured to the radiator core support 8 to the front end of the air duct 4, lies immediately behind the head lamp unit 10 which is provided on the left- and right-hand side on the front of the car body, and there is no sufficient room for replacing the head lamp unit bulb. Obviously, when replacing a bulb 11 of the head lamp unit 10, the duct portion 4a of the air duct 4 must be displaced out of the way because it would otherwise hinder the replacement work of the bulb 11. The duct portion of the air duct, however, is held immovable with its front end inserted into the opening 6 of the hood ledge 5 and with the intermediate portion fastened to the radiator core support 8, and it is therefore not easy to remove it to clear the way for the bulb 11. That is, before replacing the bulb 11 the fastening must first be loosened and removed by using some tool and the air duct 4 pulled toward the center of the engine room to withdraw its front end from the opening 6 of the hood ledge 5. Then the duct portion is bent to provide a sufficient space behind the head lamp unit 10 to allow replacement of the bulb 11. In this way, the conventional air duct structure requires a troublesome work for removal of the duct portion before one can replace the head lamp unit bulb. In Figures 1 and 2, indicated at 20 and 21 are a front fender and a head lamp unit mounting bracket, respectively.

From FR-A-1 023 124 an air duct structure of an engine for a motor vehicle is known which comprises an air cleaner which is located on top of the middle portion of the engine. The air cleaner is connected to two air ducts which lead to the respective left or right side portion of the vehicle body. The outer ends of these air ducts are connected to the vehicle body via a bushing which allows the fresh air to pass through the bushing and through the respective air duct to the air cleaner. The air ducts are made of elastic material in order to damp the vibrations of the engine. This arrangement is adhered with the drawback that it requires a large amount of space within the vehicle body. Therefore, such an arrangement is not comfortable in respect of the modern compact cars. Furthermore, such an air duct arrangement results in difficult flow conditions not only in the elastic air duct itself but also in the area of the bushing.

The object of the present invention is to provide an automotive air duct structure in which a duct portion of air duct which lies behind the head lamp unit can readily be moved out of position to clear the way for the head lamp unit without having to remove fastenings on the air duct by using tool, thereby allowing a quick and easy replacement of the head lamp unit bulb.

To achieve this objective, at least a part of the duct portion is constituted by a flexible duct which can be axially contracted so as to readily allow said duct portion to be pulled out from the first supporting member.

According to another object of the invention said second supporting member comprises a clamp attached to a radiator core support of the motor vehicle.

A further object of the invention is that said first supporting member comprises a hood ledge of the motor vehicle, said hood ledge being formed with an opening, the front end of said air duct being inserted into said opening.

According to yet another object of the invention, said flexible duct comprises an extensible, contractible and bendable bellows.

Figure 1 is a plan view of an automotive engine room showing the arrangement of the air duct;

Figure 2 is a perspective view, partially cut away, showing one example of conventional automotive air duct structure;

Figure 3 is a perspective view, partially cut away, showing one example embodiment of an automotive air duct structure of this invention; and

Figure 4 is a cross-sectional view of the air duct structure of this invention taken along the line IV–IV of Figure 1.

The present invention will now be described with reference to the accompanying drawings.

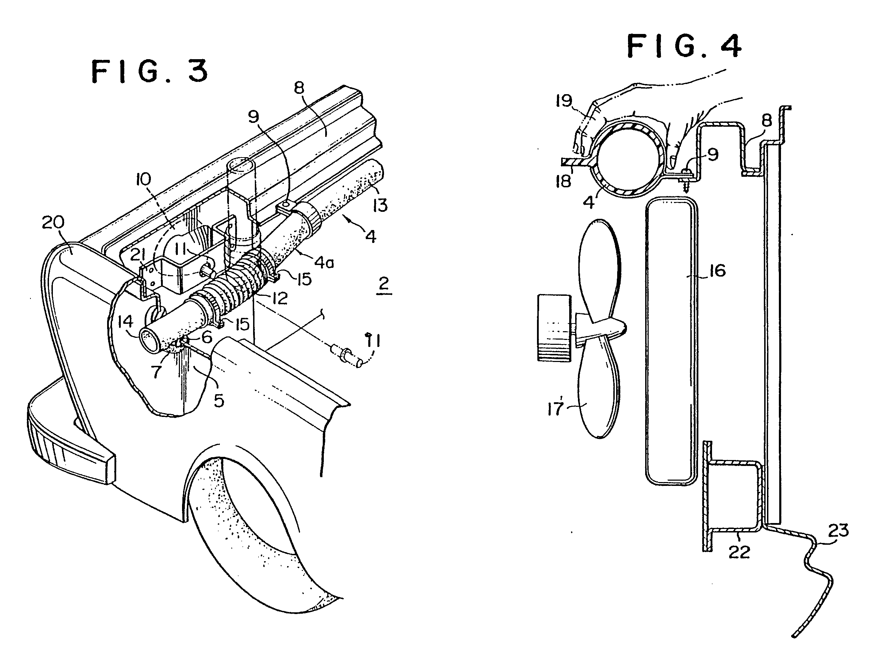

Referring to Figure 3 showing one embodiment of this invention, an air duct 4, as with the conventional one, has its end inserted, through a grommet 7, into an opening 6 formed in the hood ledge 5 and also has its intermediate portion secured by a fastening 9 such as screw to the central upper portion of a radiator core support 8. A major difference of the air duct of this invention from the conventional one is that an extensible, contractible and bendable bellows 12 is provided to a duct portion 4a which extends from the fastening 9 secured to the car body to the front end.

In this embodiment, the air duct 4 consists of an air duct body 13 connected to the air cleaner 1 and a front duct part 14 which is provided separate from the air duct body 13 and securely inserted into the opening 6 of the hood ledge 5. Securely connected by clamp rings 15, 15 between the air duct body 13 and the front duct part 14 is the flexible bellows 12 lying behind the head lamp unit 10.

As shown in Figure 4, a cross section taken along the line IV–IV of Figure 1, a portion of the air duct 4 disposed above a radiator cooling fan 17 mounted behind the radiator 16, which is installed at the front of the car body, is formed integral with a horizontally extending protective flange 18 to prevent worker's fingers 19 from touching the cooling fan 17 while servicing the engine room 2. In Figure 4, denoted 22 is a front cross member and 23 an apron.

When, with the air duct structure of this embodiment, a bulb 11 of the head lamp unit 10 is to be replaced, the duct portion 4a behind the head lamp unit 10 is moved out of position indicated by the solid line of Figure 3 into the upright position shown by the two-dot line. That is, the bellows 12 on the duct portion 4a is contracted to pull out the front end of the air duct from the opening 6 of the hood ledge 5, after which the duct portion 4a is bent upright at the bellows 12 to provide a sufficient space behind the head lamp unit 10 for replacing the bulb 11. After the replacement of the bulb is completed, the duct portion 4a is restored to the original position behind the head lamp unit 10 as indicated by the solid line of Figure 3.

Although in the above embodiment the bellows 12 is provided behind the head lamp unit 10, the position of the bellows may be other than this as long as it allows flexible movement of the duct portion 4a from behind the head lamp unit to ensure easy replacement of the bulb 11. In addition, while the bellows 12 is formed separated from the air duct 4, it is possible to form the bellows integral with the air duct 4. Further, while in the above embodiment the front end of the air duct 4 is inserted into the opening 6 cut in the hood ledge 5, it is possible to form an opening at the side of the radiator core support 8 and insert the air duct front end into that opening for introducing air. Furthermore, although the above embodiment has been described in the case of the air duct 4 which is formed of rigid synthetic resin, it goes without saying that the present invention is also applicable to those air ducts which have bellows between the air cleaner 1 and the intermediate portion of duct secured to the car body. It should also be noted that this invention can be applied to air ducts for the fuel injection controllers in addition to those for the air cleaners. Last but not least, it should also be noted that the bellows may be replaced by some other flexible members.

As can be seen from the foregoing, since the automotive air duct structure of this invention employs flexible bellows in at least a part of the duct portion of air duct which ranges from the intermediate portion of the air duct fastened to the car body to the front end of air duct and which lies behind the head lamp unit, the duct portion of the air duct can easily be displaced from behind the head lamp unit because of the flexibility of the bellows without having to use tools which are required with the conventional air duct structure.

This in turn allows the replacement of the head lamp unit bulb to be performed very easily.

## Claims

1. An air duct structure of an engine (3) for a motor vehicle, comprising an air duct (4) for introducing air into said engine (3), said air duct (4) being supported at its front end by a first supporting member (7) and at an intermediate portion by a second supporting member (9), the portion (4a) of the air duct (4) between said first supporting member (7) and second supporting member (9) lying immediately behind a head lamp unit (10) of the motor vehicle characterised in that at least a part of the duct portion (4a) is constituted by a flexible duct (12) which can be axially contracted so as to readily allow said duct portion (4a) to be pulled out from the first supporting member (7).

2. An air duct structure as set forth in claim 1, wherein said second supporting member (9) comprises a clamp attached to a radiator core support (8) of the motor vehicle.

3. An air duct structure as set fort in any of claims 1 and 2, wherein said first supporting member (7) comprises a hood ledge (5) of the motor vehicle, said hood ledge (5) being formed with an opening (6), the front end (14) of said air duct (4) being inserted into said opening (6).

4. An air duct structure as set forth in any of claims 1 to 3, wherein said flexible duct (12) comprises an extensible, contractible and bendable bellows.

## Patentansprüche

1. Luftzuführung für einen Motor (3) eines Kraftfahrzeuges mit einem Ansaugkanal (4) zur Zufuhr von Luft in den Motor (3), wobei der Ansaugkanal (4) an seinem vorderen Ende mittels eines ersten Befestigungselements (7) und an einem mittleren Bereich mittels eines zweiten Befestigungselements (9) gelagert ist, wobei der Bereich (4a) des Ansaugkanals (4) zwischen dem ersten (7) und dem zweiten (9) Befestigungselement unmittelbar hinter einem Hauptscheinwerfer (10) des Kraftfahrzeugs angeordnet ist, dadurch gekennzeichnet, daß zumindest ein Teil des Bereichs (4a) des Ansaugkanals in Form eines flexiblen Kanals (12) ausgebildet ist, welcher axial zusammenschiebbar ist, so daß der Bereich (4a) des Ansaugkanals in einfacher Weise aus dem ersten Befestigungselement (7) herausziehbar ist.

2. Luftzuführung nach Anspruch 1, wobei das zweite Befestigungselement (9) eine Klammer umfaßt, welche am Auflager (8) des Fahrzeugskühlers befestigt ist.

3. Luftzuführung nach einem der Ansprüche 1 und 2, wobei das erste Befestigungselement (7) einen Kotflügel (5) des Kraftfahrzeuges umfaßt, wobei der Kotflügel (5) mit einer Öffnung (6) versehen ist, und wobei das vordere Ende (14) des Ansaugkanals (4) in die Öffnung (6) einführbar ist.

4. Luftzuführung nach einem der Ansprüche 1 bis 3, wobei der flexible Kanal (12) einen verlängerbaren, zusammenschiebbaren und biegbaren Faltenbalg umfaßt.

**Revendications**

1. Dispositif de tube d'aspiration d'air pour un moteur (3) de véhicule automobile, comprenant un tube à air (4) pour l'introduction d'air dans ledit moteur (3), ledit tube à air (4) étant supporté à son extrémité avant par un premier élément de support (7), et à une partie intermédiaire, par un deuxième élément de support (9), la partie (4a) du tube à air (4) située entre lesdits premier élément de support (7) et deuxième élément de support (9) se trouvant immédiatement derrière le dispositif de projecteur (10) du véhicule à moteur, caractérisé en ce qu'au moins un tronçon de la partie de tube (4a) est constitué par un tube flexible (12) qui peut être contracté axialement de manière à permettre à ladite partie de tube (4a) d'être tirée hors du premier élément de support (7).

2. Dispositif de tube d'aspiration d'air suivant la revendication 1, dans lequel ledit deuxième élément de support (9) comprend un collier de fixation fixé à un support (8) du corps de radiateur du véhicule à moteur.

3. Dispositif de tube d'aspiration d'air suivant l'une quelconque des revendications 1 et 2, dans lequel ledit premier élément de support (7) comprend un rebord (5) d'appui du capot du véhicule à moteur, ledit rebord (5) d'appui du capot étant formé avec une ouverture (6), l'extrémité avant (14) dudit tube à air (4) étant insérée dans ladite ouverture (6).

4. Dispositif de tube d'aspiration d'air suivant l'une quelconque des revendications 1 à 3, dans lequel ledit tube flexible (12) comprend un soufflet susceptible d'extension, de contraction et de flexion.

FIG. 2

FIG. 1

FIG. 3

FIG. 4

EP 0 065 183 B2